# EUROPEAN PATENT APPLICATION

(11) **EP 4 311 460 A1**
(43) Date of publication of application: **31.01.2024**
(21) Application number: 22187106.4
(22) Date of filing: 26.07.2022
(51) Int. Cl.: A47J 43/046, A47J 27/00

(54) **MACHINE FOR PREPARING SMOOTHIES FROM A FROZEN FOOD PREPARATION WITH TEMPERATURE CONTROL AND CONTROL METHOD THEREFOR**

(71) Applicant: IFGOOD FZ-LLC, Rak (AE)
(72) Inventor: Fino, João, Leiria (PT)
(74) Representative: Pereira da Cruz, Joao

(57) **Abstract**

The present invention falls within the scope of juice and smoothies making machines, from an individual portion of a frozen food preparation, preferably fruits, comprising a fitting block (12) with a heating plate (2) and a temperature measurement (30); a blade block comprising a cutting blade (24), the blade block (20) being coupled to a cup (19) on the blade side; the assembly formed by the cup (19) and the blade block (20) being attachable to the fitting block (12) where a grinding and heating operation occurs until the ideal point of consumption of the product has been reached.

## Description

### FIELD OF THE INVENTION

The present invention is enclosed in the area of juice and smoothie making machines from a frozen food preparation.

### PRIOR ART

A solution exist in the art where a machine for preparing juices from a frozen food preparation food comprises a fitting block with a heating plate and a cutting blade on a blade block for heating and cutting the frozen food, such as the case of patent application EP 3878323.

The frozen food for the production of the juice or smoothies presents a great variability of the storage temperature while frozen due to the existing differences between the operating temperatures of the freezers, reflecting in the initial temperature of the frozen food, therefore the operation may not lead to a final product always under the same temperature conditions, even if the processing time in the machine is always the same for a certain type of product.

The cited prior art describes that temperature of the juice or smoothie, the final product, obtained is determined by a pre-defined grinding and heating time depending on the type of frozen food, assuming that the initial temperature of the frozen food would be around -18ºC. The time for grinding and heating was set taking in consideration the same type of food and the same medium temperature as a starting point.

This type of control was found to be insufficient and imprecise since the frozen storage temperature can vary from one freezer to another and even inside the same freezer, from -30ºC to -15ºC, depending if the place of storage is near the bottom or near the door. For these reason the lack of measurement of temperature of the frozen food in the beginning and during the operation may lead to a final product with different temperature and not with the same quality.

The present solution consists in an innovation in relation to the prior art since it comprises a temperature measurement located on the fitting block which allows to have a strict control of the temperature of the final product to be obtained, avoiding irregular final temperature, either too cold or too hot. The temperature sensor measures the temperature on the surface of the cup which contains the frozen food during a processing step - grinding and heating - and when it reaches a pre-set processing temperature, the heating element switches off.

At the same time, the introduction of the temperature measurement allows the optimization of the time for operation since the time is reduced when the starting temperature of the frozen food is higher of the medium temperature considered as a starting point, saving energy and reducing material wear in the long term use.

### SUMMARY OF THE INVENTION

It is therefore the object of the present invention a machine for preparing smoothies from a frozen food preparation with temperature control which comprises a heating and grinding unit comprising:
a) a fitting block (12) comprising a heating plate (2) and a temperature measurement element (30) ;
a) a blade block (20) having a first side and a blade side, the blade block(20) comprising a cutting blade (24) in the first side being coupled to a cup (19) on the blade side;
the assembly formed by the cup (19) and the blade block (20) being attachable to the fitting block (12)

The machine of the present invention comprises the temperature measurement element (30) on the fitting block (12) for constant measurement of the temperature of the outer surface of the cup (19) containing the frozen food during processing. The placement of the temperature measurement element (30) on the fitting block allows a strict control of the heating plate (2), remaining on only for the time strictly necessary.

The machine also comprises a security cap (40) that covers the cup (19) and the fitting block (12). When the machine is processing the frozen food, the security cap (40) is closed covering the cup (19), the fitting block (12) and the assembly to avoid any risks of damages in the user in case assembly accidently detaches the fitting block or to avoid any burns on the user.

The machine further comprises a digital interface witch communicates with an electronic board on the machine, comprising a processor that runs the software and controls all the machine's components.

It is also an object of the present invention a method for preparing a smoothie from a frozen food preparation with temperature control with the machine which comprises a processing step, this step with constant measurement of the temperature of the surface of the cup (19) up to a pre-set final temperature through the temperature measurement element (30).

The processing step of the described method comprises simultaneous grinding and heating of the frozen food inside the cup (19).

The processing step further comprises the steps:
- for a pre-defined minimum grinding time, with grinding velocity slowing down to a lower speed until it reaches the pre-defined minimum time, and
- by the constant measurement of the temperature of the surface of the cup (19), turning off the heating plate (2) when the measured temperature, optionally the surface of the cup (19), reaches a pre-set processing temperature, such measured temperature being lower than a pre-set final temperature.

It is important to define that the high speed grinding promotes the grinding of the frozen product until a smoothie is formed with a uniform viscosity and that a lower speed grinding only keeps the mixture moving inside the cup (19), to uniformly heat the product.

The grinding and heating start simultaneously, so when the processing temperature is reached before the minimum high-speed grinding time, the heating plate (2) is turned off and high-speed grinding continues until the minimum high speed grinding time is reached.

When the minimum high speed grinding time is reached before the processing temperature is reached, the grinding at high speed slows downs to a lower speed, and the heating plate (2) remains on until the processing temperature is reached.

The fact that there is a control of the grinding time and the temperature control of the product processing guarantees that the final product is always obtained under the same conditions of texture and temperature.

The temperature control, also ensures that the final product is always obtained under the same conditions, allows the heating plate (2) to remain on only for the strictly necessary time, adjusting energy consumption according to the initial temperature of the cup (19) with the advantage of reducing material wear in a long term use.

Additionally, the security cap (40) being opened when the minimum high speed grinding time is reached after the heating plate is turned off or the pre-set final temperature is reached, signaling that the product is ready to be consumed in the ideal conditions and always under the same conditions.

The thermal inertia of the heating plate (2) after its operation has ceased, allows it to continue heating the cup (19) even after it has been turned off, until the cup (19) reaches the pre-set final temperature. This control has the advantage that the final product is not served at a temperature higher than the ideal and is always served under the same conditions.

It also prevents the user from suffering burns or discomfort when removing the cup since the heating plate is already off before the cup reaches its final temperature.

### DESCRIPTION OF THE FIGURES

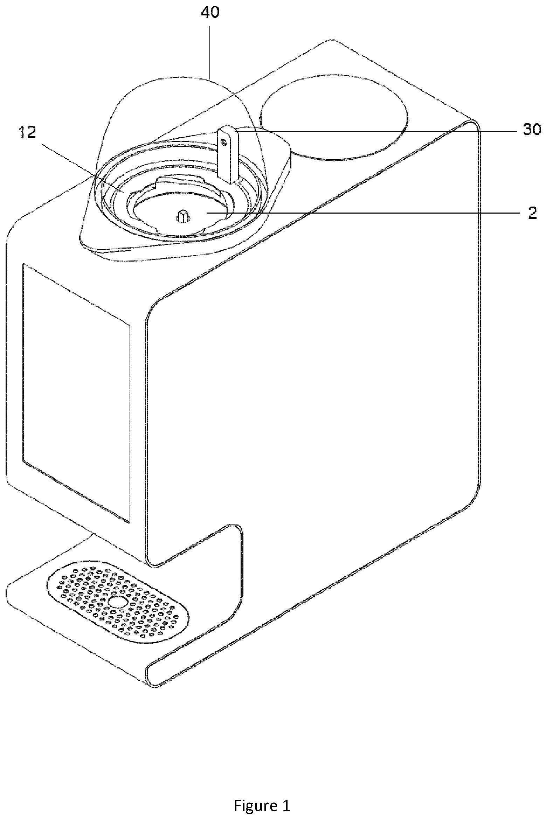

Figure 1 - Schematic perspective view of the machine for preparation of smoothies comprising a fitting block (12) with a heating plate (2), a temperature measurement element (30) on the fitting block (12) and a security cap (40).

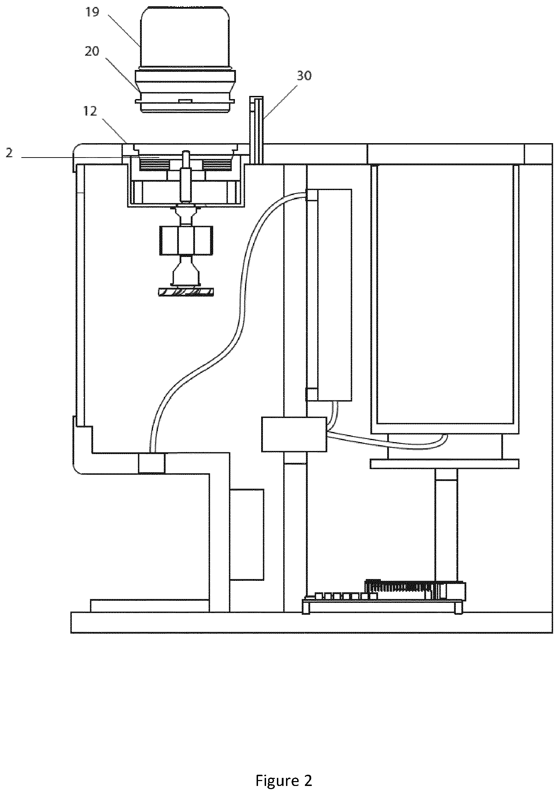

Figure 2 - Representation of a sectional view of the machine comprising a fitting block (12) with a heating plate (2) and a temperature measurement element (30) on it and a blade block (20) having a cutting blade (24) in one side, the blade block (20) being coupled to a cup (19) on the blade side; the assembly formed by the cup (19) and the blade block (20) being attachable to the fitting block (12).

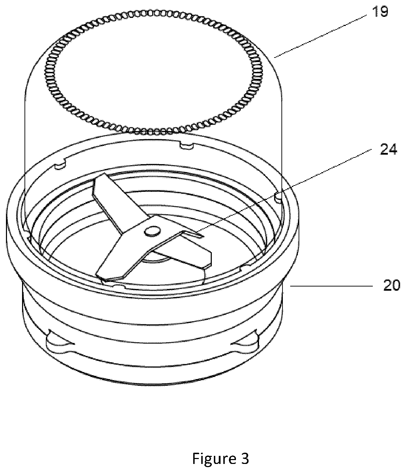

Figure 3 - Schematic perspective view of the assembly formed by the cup (19) and the blade block (20) with a cutting blade (24).

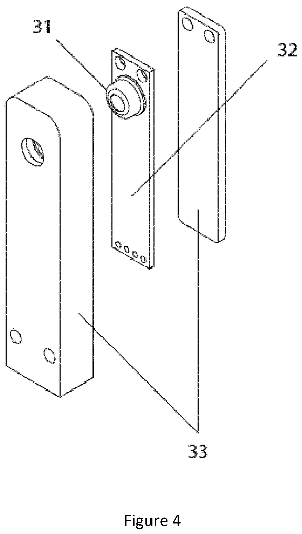

Figure 4 - Schematic perspective view of the temperature measurement (30), having a casing (33), the measurement sensor(31) and electronic board (33).

### DETAILED DESCRIPTION OF THE INVENTION

The more general configurations of the present invention are described in the Summary of the invention. Such configurations are detailed below in accordance with other advantageous and/or preferred embodiments of implementation of the present invention.

Several embodiments of the machine of the present invention are described subsequently.

In an inventive aspect of the machine of the present invention, the temperature measurement element (30) is located on the perimeter of fitting block (12) facing outwards. This location allows a strict measurement of the surface cup (19) temperature since it is at a distance of less than 2 cm from the cup (19), reducing measurement variability. At the same time as the liquid inside rotates at high speed, the temperature will be identical at any point on the cup (19). In addition, it allows for a simpler, faster and more reliable assembly of the machine.

Preferably, the temperature measurement (12) is located between the assembly formed by the cup (19) and the blade block (20) is attached to the fitting block (12) and the security cap (40).

In an embodiment of the present invention, the temperature measurement element (30) is a infra-red type. This kind of temperature measurement it is the most reliable and with an easier implementation in the machine as it takes a temperature measurement without needing direct contact with the surface.

In another embodiment of the present invention the heating plate (2) has a heating power of 500-650 watt which allows a strict control between pre-set processing temperature and the pre-set final temperature.

In an inventive aspect of the method of control the difference between the pre-set processing temperature and the pre-set final temperature is 1 to 2 ºC.

In a preferred embodiment of the invention, the minimum grinding time will be between 15 and 45 seconds, depending on the type of smoothie selected, which time makes it possible to obtain a smoothie with an optimal texture.

The control of the processing temperature and final temperature of the cup is defined according to the type of final product to be obtained. The type of final product is selected on the digital interface, being the pre-set processing temperature and pre-set final temperature set according it.

The processing step begins with the cup having a temperature on its surface between -20ºC and -0ºC and final temperature of the cup may be between 5ºC and 40ºC. The final depends if it regards a fruit smoothie, a fruit puree or a warm meal like porridge among other possibilities

The processing step stops 80 to 100 seconds after it started. In case of measurement failure or heating plate (2) malfunction, the processing temperature of the cup (2) may never be reached, so an automatic shutdown of the machine is required for safety reasons.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A machine for preparing smoothies from a frozen food preparation with temperature control which comprises a grinding and a heating unit comprising:
a) a fitting block (12) comprising a heating plate (2) and;
b) a blade block (20) having a first side and a blade side, the blade block(20) comprising a cutting blade (24) in the first side being coupled to a cup (19) on the blade side;
the assembly formed by the cup (19) and the blade block (20) being attachable to the fitting block (12), **characterized in that** fitting block (12) further comprises a temperature measurement element (30).

2. A machine according to any of the preceding claims where in it comprises a security cap (40) that covers the cup (19) and the fitting block (12).

3. A machine according to the previous claim where in the temperature measurement element (30) is located on the perimeter of the fitting block (12), facing outwards.

4. A machine according to the previous claim where in the temperature measurement element (30) is located between the assembly formed by the cup (19) and the blade block (20) and the security cap (40).

5. A machine according to any of the preceding claims where in the temperature measurement element (30) is an infra-red temperature measurement element (30).

6. A machine according to any of the preceding claims where in the heating plate (2) has a heating power of 500-650 watt.

7. A method for preparing a smoothie from a frozen food preparation with temperature control with the machine of any of the claims 1 to 6, **characterized in that** it comprises a processing step, this step with constant measurement of the temperature of the surface of the cup (19) up to a pre-set final temperature through the temperature measurement element (30).

8. A method according to the previous claim wherein the processing step comprises simultaneous grinding and heating of the frozen food inside the cup (19).

9. A method according to the previous claim (30), wherein it further comprises performing the processing step:
• for a pre-defined minimum grinding time, with grinding velocity slowing down to a lower speed until it reaches the pre-defined minimum time, and
• by the constant measurement of the temperature of the surface of the cup (19), turning off the heating plate (2) when the measured temperature, optionally the surface of the cup (19), reaches a pre-set processing temperature, such measured temperature being lower than a pre-set final temperature.

10. A method for preparing a smoothie according to claim 9 wherein when the processing temperature is reached before the minimum high speed grinding time, the heating plate is turned off and the grinding continues until the minimum high speed grinding time is reached.

11. A method for preparing a smoothie according to claim 9 where in when the minimum grinding time is reached before the processing temperature is reached, the high speed grinding slows down to a lower speed, and the heating plate remains on until the processing temperature is reached.

12. A method for preparing a smoothie according to the preceding claims wherein it additionally comprises the step of the security cap (40) being opened when the minimum high speed grinding time is reached after the heating plate is turned off or the pre-set final temperature is reached.

13. A method for preparing a smoothie according to any of the preceding claims wherein the pre-defined minimum grinding time is 15 to 45 seconds and the processing step stops 80 to 100 seconds after it started

14. A method for preparing a smoothie according to any of the preceding claims wherein the difference between the pre-set processing temperature and the pre-set final temperature is 1 to 2 ºC.

15. A method for preparing a smoothie according any of the preceding claims wherein the processing step begins with the cup having a temperature on its surface between -20ºC and 0ºC and final temperature of the cup being between 5ºC and 40ºC.
